# EUROPEAN PATENT SPECIFICATION

(11) **EP 3 267 785 B1**
(45) Date of publication and mention of the grant of the patent: **08.05.2019**
(21) Application number: 16719150.1
(22) Date of filing: 08.03.2016
(51) Int. Cl.: A01G 13/00, A01G 13/02

(54) **APPARATUS FOR PLACEMENT AND PICKING UP OF A FABRIC**
GERÄT ZUM AUFSTELLEN UND AUFHEBEN EINES GEWEBES
DISPOSITIF DE POSE ET DE RECUPERATION D'UN TISSU

(30) Priority: 09.03.2015 NL 2014427
(43) Date of publication of application: 17.01.2018
(73) Proprietor: BSE Ymond BV, 1948 RK Beverwijk (NL)
(72) Inventor: VAN ECHTELT, Johannes Gerardus, 1648 EJ De Goorn (NL); BEENTJES, Jacobus Hendrikus Maria, 1902 NN Castricum (NL)
(74) Representative: Van Breda, Jacobus
(86) International application number: PCT/NL2016/050157
(87) International publication number: WO 2016/144167

(56) References cited:
- EP-A1- 0 304 899
- EP-A1- 1 249 158
- WO-A1-98/56235
- DE-A1- 10 006 054
- DE-U1- 9 317 150
- FR-A1- 2 620 592
- GB-A- 1 504 967
- GB-A- 2 239 154
- US-B1- 6 299 094

## Description

The invention relates to an apparatus for placement of a fabric on a plantation field and picking up of said fabric from a plantation field, apparatus comprises a frame that is provided with a storage reel for the fabric and a guiding organ or organs to guide the fabric between the storage reel and the plantation field. During use the apparatus is mounted on the front or the rear of a tractor.

WO98/56235 (also published as US-B-6,290,163) discloses an apparatus which is (merely) suited for picking up fabrics from plantation fields, which comprises a frontally mounted capturing device, through which a spread out fabric may be pulled in, thus forming a narrow strand. The strand is stored on a reel which is mounted on the apparatus. The apparatus is further provided with hollow cylinders for guiding the strand of fabric in a gathered state to the reel, wherein there is further an oscillating arm for evenly distributing the strand of fabric onto the reel. The apparatus is neither suited nor intended for placement of a fabric onto a plantation field. Although this known apparatus is marketed as a huge commercial success for its laboursaving and speed of working considering that it clears one hectare in 15 minutes, a notable disadvantage is that the apparatus is only suited to collect the fabric from the plantation field. There remains a necessity in the prior art to employ as much as six man for placement of said fabric on the plantation field. Needless to say that this is very costly and time-consuming.

From EP-A-1 249 158 an apparatus is known for placement of a fabric on a plantation field and picking up of such fabric from a plantation field, comprising a frame, which frame is provided with a storage reel for the fabric and a bow mounted on the frame to guide the fabric between the storage reel and the plantation field, and which bow is construed to support during use the fabric being placed on the plantation field or being picked up from the plantation field, wherein said bow extends beyond sides of the frame to a breadth approximating a width of a plantation bed or beds from the plantation field.

The construction of the apparatus of WO98/56235 and the construction of the apparatus of EP-A-1 249 158 are mutually incompatible alternatives in as far as it concerns equipment for picking up fabric from a plantation field, not to mention that only the device of EP-A-1 249 158 is equipped to both place fabric on a plantation field and pick such fabric up from the plantation field. The apparatus of WO98/56235 is not suited for that dual purpose.

It is an object of the invention to provide an alternative for the prior art apparatus known from EP-A-1 249 158 which is suited to not only pick up fabric from a plantation field, but also to place a fabric on a plantation field.

It is a further object of the invention to provide an apparatus of simpler construction which is easier to maintain.

It is still a further object of the invention to provide an apparatus which enables a reduction of manpower that is required to place a fabric on a plantation field, or that is required to pick the fabric up from the plantation field.

These and other objects and advantages of the invention are provided by an apparatus according to one or more of the appended claims.

In a first aspect of the invention an apparatus for placement of a fabric on a plantation field and picking up of a fabric from a plantation field is proposed, comprising a frame provided with a storage reel for the fabric and a bow mounted on the frame, which bow is construed to support during use the fabric being placed on or being picked up from the plantation field and to guide the fabric between the storage reel and the plantation field, which bow extends beyond sides of the frame to a breadth approximating a width of a plantation bed or beds from the plantation field, and wherein a swivable or oscillating arm is provided to the apparatus, which arm supports a ring positioned between the storage reel and the bow, and through which ring the fabric can be guided for evenly taking up the fabric from the storage reel or supplying the fabric to the storage reel.

The apparatus of the invention has proven to be a very effective and reliable tool to accurately convert the fabric from being a strand to being spread out to a breadth capable of covering a plantation bed or beds of a plantation field, or to convert the fabric from that breadth back to being a strand. The breadth of the fabric on the plantation field can be for instance 15 m, corresponding to the breadth of 10 plantation beds including the walking paths between those beds. Other dimensions are however just as feasible, for instance 18 m or 19 m. When stored on the reel of the apparatus of the invention the fabric will occupy a breadth of approximately 2 m.

Advantageously the bow comprises a left bow part and a right bow part, wherein said left bow part and said right bow part are swivably mounted on the frame. This provides the advantage that the apparatus is easily movable when not in use for placement or collection of the fabric. The ease of movability of the apparatus comes particularly in reach when the left bow part and the right bow part are swiveled to a position approximately in line with the sides of the frame between which the storage reel takes up the fabric.

Beneficially the storage reel is embodied with a rotatable axle of the frame mounted between wheels for restraining the fabric on the axle. The just mentioned left bow part and right bow part can be swiveled to a position next to these wheels to bring them in line with the sides of the frame between which the storage reel takes up the fabric.

It is preferred that the bow is positioned at a distance of the storage reel which arranges that a path that the fabric has to travel from the storage reel to the bow is shorter at the bow's sides than at the bow's middle. This assists that the fabric will not run off the bow yet move over it stably and reliably.

The invention will hereinafter be further elucidated with reference to the drawing of an exemplary embodiment of an apparatus according to the invention that is not limiting as to the appended claims.

In the drawing:
- figure 1 shows an apparatus according to the invention in use;
- figure 2 shows the apparatus of figure 1 when not in use for placement or collection of a fabric; and

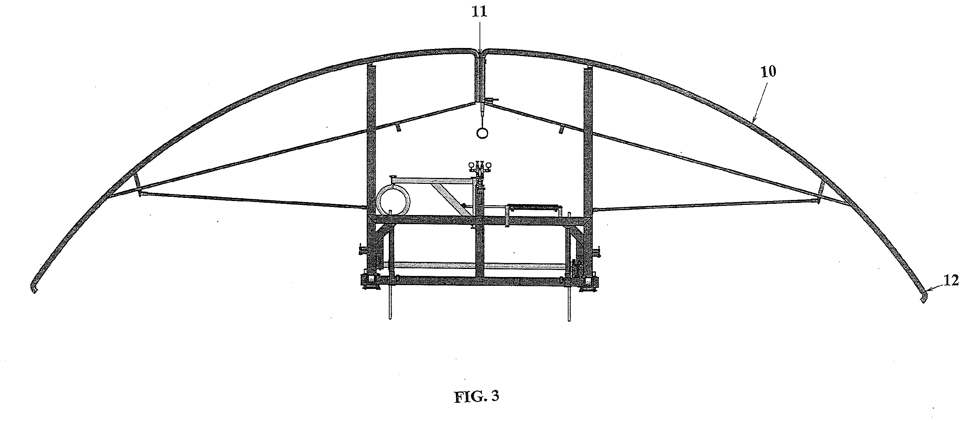

- figure 3 provides a schematic rear view of the apparatus of figure 1.

Whenever in the figures the same reference numerals are applied, these numerals refer to the same parts.

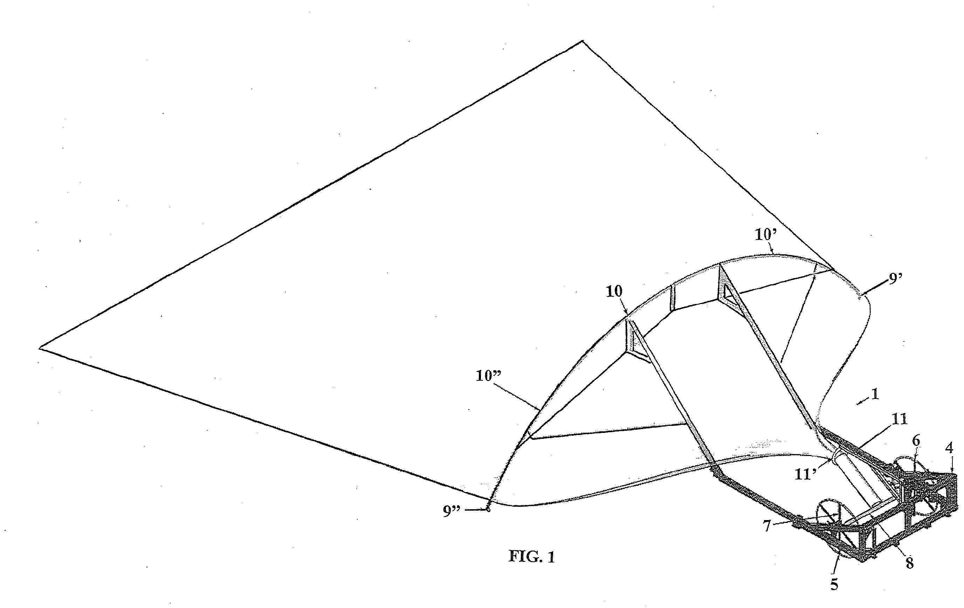

Making first reference to figure 1, the apparatus 1 of the invention is shown which is usable for both placement and for picking up of a fabric 2 to or from a plantation field 3.

The apparatus 1 comprises a frame 4 which is provided with a storage reel 7 for the fabric 2 which storage reel 7 is embodied by a rotatable axle 8 of the frame 4 provided with wheels 5, 6 to restrain the fabric 2 on the axle 8.

The frame 4 is further provided with a guiding organ or organs 9', 9'', 11 to guide the fabric 2 between the storage reel 7 and the plantation field 3, wherein the guiding organ or organs 9', 9'' comprise a bow 10 mounted on the frame 4, which bow 10 is construed to support during use the fabric 2 being placed on or picked up from the plantation field 3. Figure 1 shows further that the bow 10 extends beyond sides of the frame 4 to a breadth which for all practical purposes preferably approximates a width of a plantation bed or beds from the plantation field 3. The guiding organ or organs 9', 9", 11 also comprise a swivable or oscillating arm 11 that is provided with a ring 11' through which the fabric 2 can be guided for evenly taking up the fabric from the storage reel 7 or for supplying the fabric to the storage reel 7.

It is further remarked that a preferable feature of the apparatus of the invention is that the bow 10 is positioned at a distance of the storage reel 7 which arranges that a path that the fabric 2 has to travel from the storage reel 7 to the bow 10 is shorter at the bow's sides than at the bow's middle.

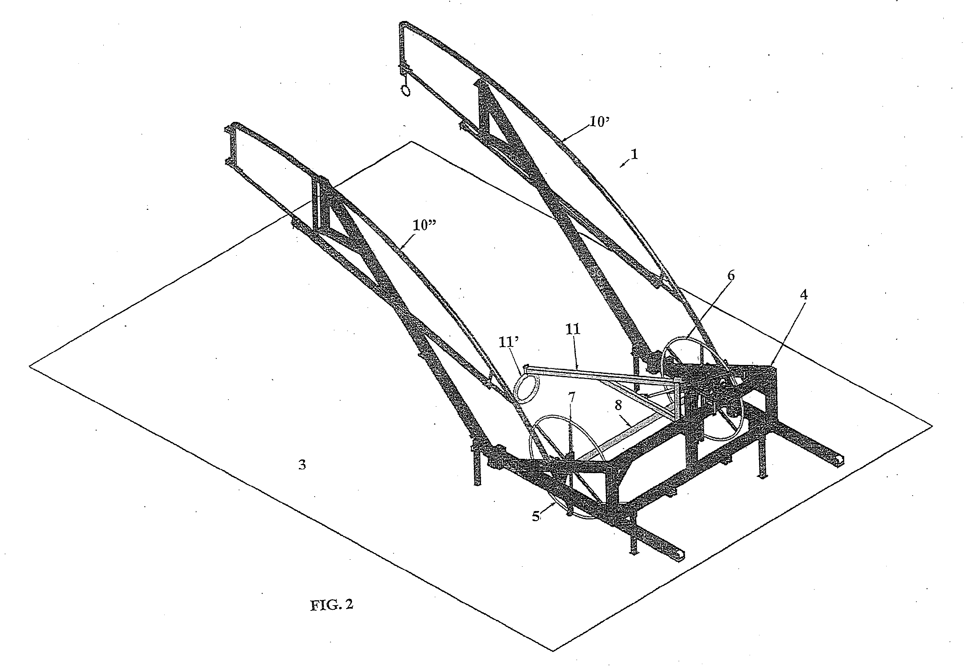

The following aspect of the apparatus of the invention is better explained with reference to figure 2. Figure 2 shows that the bow 10 comprises a left bow part 10' and a right bow part 10''. Said left bow part 10' and said right bow part 10" are swivably mounted on the frame, so as to enable that - as figure 2 shows -the left bow part 10' and the right bow part 10" can be swiveled to a position approximately in line with the sides of the frame between which the storage reel 7 takes up the fabric 2. In practice these sides correspond to the wheels 5, 6 of the frame 4. In this position transportation of the apparatus 1 of the invention when not in use for placement or collection of fabrics can be easily accomplished.

Although the invention has been discussed in the foregoing with reference to an exemplary embodiment of the apparatus of the invention, the invention is not restricted to this particular embodiment which can be varied in many ways without departing from the invention. The scope of protection of the invention shall be construed in accordance with the appended claims only.

## Claims

1. Apparatus (1) for placement of a fabric on a plantation field (3) and for picking up of a fabric (2) from a plantation field (3), comprising a frame (4), which frame (4) is provided with a storage reel (7) for the fabric (2), a bow (10) mounted on the frame (4), which bow (10) is constructed to support during use the fabric (2) being placed on the plantation field (3) or being picked up from the plantation field (3) and to guide the fabric (2) between the storage reel (7) and the plantation field (3), a swivable or oscillating arm (11), which arm (11) supports a ring (11') positioned between the storage reel (7) and the bow (10), and through which ring (11') the fabric (2) can be guided for evenly taking up the fabric (2) from the storage reel (7) or for supplying the fabric to the storage reel (7), **characterised in that**, the bow (10) extends beyond sides of the frame (4) to a breadth approximating a width of a plantation bed or beds from the plantation field (3).

2. Apparatus (1) according to claim 1, **characterized in that** the bow (10) comprises a left bow part (10') and a right bow part (10''), wherein said left bow part (10') and said right bow part (10'') are swivably mounted on the frame (4) .

3. Apparatus (1) according to claim 2, **characterized in that** the left bow part (10') and the right bow part (10") are swivable to a position approximately in line with the sides of the frame between which the storage reel (7) takes up the fabric (2).

4. Apparatus (1) according to any one of the previous claims 1 - 3, **characterized in that** the storage reel (7) is embodied with a rotatable axle (8) of the frame (4) mounted between wheels (5, 6) for restraining the fabric (2) on the axle (8).

5. Apparatus (1) according to any one of the previous claims 1 - 4, **characterized in that** the bow (10) is positioned at a distance of the storage reel (7) which arranges that a path that the fabric (2) has to travel from the storage reel (7) to the bow (10) is shorter at the bow's sides than at the bow's middle.

## Patentansprüche

1. Vorrichtung (1) zum Platzieren eines Gewebes auf einem Plantagenfeld (3) und zum Aufnehmen eines Gewebes (2) von einem Plantagenfeld (3), umfassend:
einen Rahmen (4), wobei der Rahmen (4) mit einer Speicherrolle (7) für das Gewebe (2) versehen ist,
einen Bogen (10), der an dem Rahmen (4) montiert ist, wobei der Bogen (10) zur Abstützung des während des Betriebs auf dem Plantagenfeld (3) platzierten oder von dem Plantagenfeld (3) aufgenommenen Gewebes (2) und zum Führen des Gewebes (2) zwischen der Speicherrolle (7) und dem Plantagenfeld (3) aufgebaut ist,
einen schwenkbaren oder oszillierenden Ausleger (11), wobei der Ausleger (11) einen Ring (11') stützt, der zwischen der Speicherrolle (7) und dem Bogen (10) positioniert ist, und durch welchen Ring (11') das Gewebe (2) geführt werden kann, um das Gewebe (2) gleichmäßig von der Speicherrolle (7) aufzunehmen oder das Gewebe der Speicherrolle (7) zuzuführen,
**dadurch gekennzeichnet, dass** sich der Bogen (10) über die Seiten des Rahmens (4) hinaus bis zu einer Breite erstreckt, die sich einer Breite eines Plantagenbettes oder mehrerer Plantagenbetten des Plantagenfelds (3) annähert.

2. Vorrichtung (1) nach Anspruch 1, **dadurch gekennzeichnet, dass** der Bogen (10) einen linken Bogenteil (10') und einen rechten Bogenteil (10") umfasst, wobei der linke Bogenteil (10') und der rechte Bogenteil (10") schwenkbar an dem Rahmen (4) montiert sind.

3. Vorrichtung (1) nach Anspruch 2, **dadurch gekennzeichnet, dass** der linke Bogenteil (10') und der rechte Bogenteil (10") in eine Position schwenkbar sind, die ungefähr mit Seiten des Rahmens übereinstimmt, zwischen welchen die Speicherrolle (7) das Gewebe (2) aufnimmt.

4. Vorrichtung (1) nach einem der vorhergehenden Ansprüche 1 bis 3, **dadurch gekennzeichnet, dass** die Speicherrolle (7) mit einer drehbaren Achse (8) des Rahmens (4) ausgebildet ist, die zwischen Rädern (5, 6) zum Zurückhalten des Gewebes (2) auf der Achse (8) montiert ist.

5. Vorrichtung (1) nach einem der vorhergehenden Ansprüche 1 bis 4, **dadurch gekennzeichnet, dass** der Bogen (10) in einem Abstand zur Speicherrolle (7) positioniert ist, welcher veranlasst, dass ein Weg, den das Gewebe (2) von der Speicherrolle (7) zu dem Bogen (10) zurücklegen muss, an den Seiten des Bogens kürzer als in der Mitte des Bogens ist.

## Revendications

1. Appareil (1) pour la mise en place d'une toile sur un champ de plantation (3) et pour retirer une toile (2) d'un champ de plantation (3), comprenant un bâti (4), lequel bâti (4) est prévu avec une bobine de stockage (7) pour la toile (2), un arc (10) monté sur le bâti (4), lequel arc (10) est construit pour supporter, pendant l'utilisation, la toile (2) qui est placée sur le champ de plantation (3) ou qui est retirée du champ de plantation (3) et pour guider la toile (2) entre la bobine de stockage (7) et le champ de plantation (3), un bras pivotant ou oscillant (11), lequel bras (11) supporte un anneau (11') positionné entre la bobine de stockage (7) et l'arc (10), et à travers lequel anneau (11') la toile (2) peut être guidée pour remonter régulièrement la toile (2) de la bobine de stockage (7) ou pour amener la toile à la bobine de stockage (7), **caractérisé en ce que** l'arc (10) s'étend au-delà des côtés du bâti (4) jusqu'à une étendue s'approchant d'une largeur d'un lit ou de lits de plantation du champ de plantation (3).

2. Appareil (1) selon la revendication 1, **caractérisé en ce que** l'arc (10) comprend une partie d'arc gauche (10') et une partie d'arc droite (10"), dans lequel ladite partie d'arc gauche (10') et ladite partie d'arc droite (10") sont montées de manière pivotante sur le bâti (4).

3. Appareil (1) selon la revendication 2, **caractérisé en ce que** la partie d'arc gauche (10') et la partie d'arc droite (10") peuvent pivoter jusqu'à une position approximativement alignée avec les côtés du bâti entre lesquels la bobine de stockage (7) remonte la toile (2).

4. Appareil (1) selon l'une quelconque des revendications 1 à 3, **caractérisé en ce que** la bobine de stockage (7) est mise en oeuvre avec un essieu rotatif (8) du bâti (4) monté entre des roues (5, 6) pour retenir la toile (2) sur l'essieu (8).

5. Appareil (1) selon l'une quelconque des revendications 1 à 4, **caractérisé en ce que** l'arc (10) est positionné à une distance de la bobine de stockage (7), qui est disposée sur une trajectoire que la toile (2) doit parcourir de la bobine de stockage (7) jusqu'à l'arc (10), est plus courte au niveau des côtés de l'arc qu'au niveau du milieu de l'arc.
